# FASCICULE DE BREVET EUROPEEN

(11) **EP 1 756 639 B1**
(45) Date de publication et mention de la délivrance du brevet: **12.12.2007**
(21) Numéro de dépôt: 04739893.8
(22) Date de dépôt: 14.06.2004
(51) Int. Cl.: G02B 6/42

(54) **CONCENTRATEUR AMPLIFICATEUR D'ONDE ELECTROMAGNETIQUE OPTIQUE**
OPTISCHER, ELEKTROMAGNETISCHE WELLEN VERSTÄRKENDER KONZENTRATOR
OPTICAL ELECTROMAGNETIC WAVE AMPLIFYING CONCENTRATOR

(43) Date de publication de la demande: 28.02.2007
(73) Titulaire: FRANCE TELECOM, 75015 Paris (FR); UNIVERSITE DE RENNES I, F-35000 Rennes (FR)
(72) Inventeur: BOUCHET, Olivier, F-35700 Rennes (FR); MIHAESCU, Adrian, F-22300 Lannion (FR); FERON, Patrice, F-22300 Ploubezre (FR); BESNARD, Pascal, F-22300 Lannion (FR)
(74) Mandataire: Maillet, Alain
(86) Numéro de dépôt international: PCT/EP2004/006421
(87) Numéro de publication internationale: WO 2005/124414

(56) Documents cités:
- US-A- 5 357 101
- US-A- 5 369 661
- US-A1- 2002 168 139

## Description

L'invention concerne un concentrateur amplificateur d'onde électromagnétique optique. Elle concerne aussi un dispositif de réception d'une onde électromagnétique optique comprenant une pluralité de tels concentrateurs amplificateurs. Elle trouve application dans les domaines nécessitant une détection sensible de rayonnement électromagnétique. En particulier, elle trouve application dans les domaines des télécommunications par liaisons optiques atmosphériques et des réseaux locaux sans fils par liaison optique du type infra rouge.

Les communications par liaison optique, en particulier par liaison infra rouge se font entre un émetteur qui émet le signal optique et un récepteur qui le reçoit. A cause des pertes, l'énergie du signal optique émis par l'émetteur n'est pas entièrement reçue par le récepteur et l'énergie du signal reçu peut être faible. Pour compenser ces pertes et augmenter l'énergie du signal reçu, un concentrateur est placé devant le récepteur. Ce concentrateur permet de capter les faisceaux qui passent au voisinage du récepteur et de les rediriger vers ce dernier en les focalisant, permettant ainsi une augmentation de l'énergie du signal reçu par concentration sur le récepteur.

Un tel concentrateur d'onde électromagnétique optique est décrit par Xin Yang dans un article publié par "SPIE Proceedings" de décembre 2002 (Proceedings of SPIE - Volume 4873 - Optical Wireless Communications V, Eric J. Korevaar, Editor, December 2002, pp. 71-78) sous le titre "Simulation of impulse response on IR wireless indoor channel with concentrator".

Le concentrateur a une forme de sphère tronquée placé devant un détecteur dont le rayon est supérieur au rayon du détecteur, permettant ainsi de rediriger les faisceaux incidents qui sont hors du champ du détecteur vers le détecteur. Ce type de concentrateur donne satisfaction si les énergies des différents faisceaux optiques reçus par le concentrateur ne sont pas trop faibles et si la concentration des faisceaux permet d'atteindre un certain niveau d'énergie permettant une bonne détection du signal, en particulier l'énergie totale doit permettre d'avoir un rapport signal/bruit avantageux.

US 5 357 101 décrit un concentrateur d'ondes électromagnétiques comprenant soit un dispositif de focalisation et un détecteur, soit un élément dopé soumis à un signal de pompage et un détecteur.

Un objet de la présente invention est de proposer un concentrateur amplificateur d'onde électromagnétique optique qui ne présente pas les inconvénients de l'art antérieur.

A cet effet, est proposé un concentrateur amplificateur d'onde électromagnétique optique comprenant au mois un dispositif de focalisation amplification et un récepteur, le dispositif de focalisation amplification étant adapté à focaliser une onde électromagnétique optique incidente sur le récepteur. Le concentrateur amplificateur est caractérisé en ce que le dispositif de focalisation amplification est réalisé en un matériau dopé avec des composants actifs et en ce que le dispositif de focalisation amplification est soumis à une onde d'excitation de manière à faire passer les composants actifs à un niveau d'énergie tel que l'interaction entre l'onde électromagnétique incidente et lesdits composants actifs entraîne le passage desdits composants actifs a un niveau d'énergie inférieure et l'émission d'au moins un photon ayant la même longueur d'onde que l'onde électromagnétique incidente vers le récepteur, la partie focalisée et le ou les photons émis constituant une onde amplifiée incidente de l'onde électromagnétique incidente.

L'onde incidente reçue par le dispositif de focalisation est donc amplifiée et l'onde ainsi amplifiée permet d'atteindre des valeurs de signal suffisantes pour permettre une bonne détection du signal.

Avantageusement une variation dans un sens de la puissance de l'onde d'excitation entraîne une variation dans le même sens de la puissance de l'onde amplifiée incidente. La puissance de l'onde amplifiée incidente qui circule dans le guide d'onde peut ainsi être contrôlée par la puissance de l'onde d'excitation.

Avantageusement le dispositif de focalisation amplification est sphérique ou hémisphérique.

Selon un premier mode de réalisation, le récepteur est un guide d'onde adapté à conduire l'onde amplifiée incidente.

Selon une variante du premier mode de réalisation, le guide d'onde est une fibre optique.

Avantageusement l'extrémité de la fibre optique en vis-à-vis du dispositif de focalisation amplification est munie d'une microlentille.

Avantageusement le concentrateur amplificateur comprend un dispositif tubulaire dans lequel est positionnée la fibre optique et à l'extrémité duquel est placé le dispositif de focalisation amplification.

Selon une autre variante du premier mode de réalisation, le guide d'onde est un guide planaire.

Selon un deuxième mode de réalisation, le récepteur est un convertisseur optique-électrique.

Avantageusement l'onde d'excitation est un faisceau laser.

Avantageusement l'onde d'excitation est émise vers le dispositif de focalisation amplification à partir d'un guide d'onde adapté à conduire l'onde d'excitation.

Avantageusement, selon le premier mode de réalisation, le guide d'onde adapté à conduire l'onde d'excitation est le guide d'onde adapté à conduire l'onde amplifiée incidente.

L'invention propose aussi un dispositif de réception d'une onde électromagnétique optique incidente comprenant une pluralité de concentrateurs amplificateurs selon l'un des modes précédents.

Avantageusement les dispositifs de focalisation amplification de la pluralité de concentrateurs amplificateur sont répartis sur une surface sensiblement hémisphérique.

Avantageusement le dispositif de réception comprend un sommateur optique connecté à la pluralité de récepteurs et adapté à additionner les énergies des signaux issus de chaque récepteur.

Avantageusement le dispositif de réception comprend un coupleur optique ou un démultiplexeur connecté en sortie du sommateur optique et dans lequel est injecté l'onde d'excitation.

Avantageusement le dispositif de réception comprend un dispositif de mesure de l'énergie de l'onde en sortie du coupleur optique ou du démultiplexeur et le dispositif de mesure est adapté à contrôler la puissance de l'onde d'excitation.

Avantageusement le dispositif de réception comprend un démultiplexeur optique dans lequel est injecté l'onde d'excitation et dont les sorties sont connectées à la pluralité de guides d'onde adaptés à conduire l'onde d'excitation.

Avantageusement le dispositif de réception comprend un dispositif de mesure de l'énergie du signal électrique en sortie du sommateur électrique et le dispositif de mesure est adapté à contrôler la puissance de l'onde d'excitation.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente un concentrateur amplificateur d'onde électromagnétique optique selon un premier mode de réalisation de l'invention;
la Fig. 2 représente un dispositif de réception comportant une pluralité de concentrateurs amplificateurs d'onde électromagnétique selon le premier mode de réalisation de l'invention;
la Fig. 3 représente un concentrateur amplificateur d'onde électromagnétique optique selon un deuxième mode de réalisation de l'invention;
la Fig. 4 représente un dispositif de réception comportant une pluralité de concentrateurs amplificateur d'onde électromagnétique selon le deuxième mode de réalisation de l'invention.

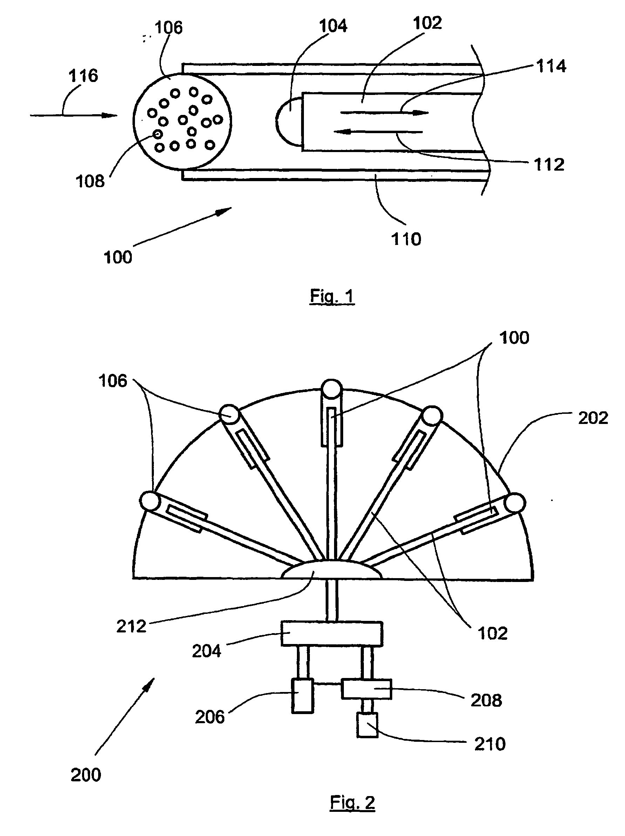

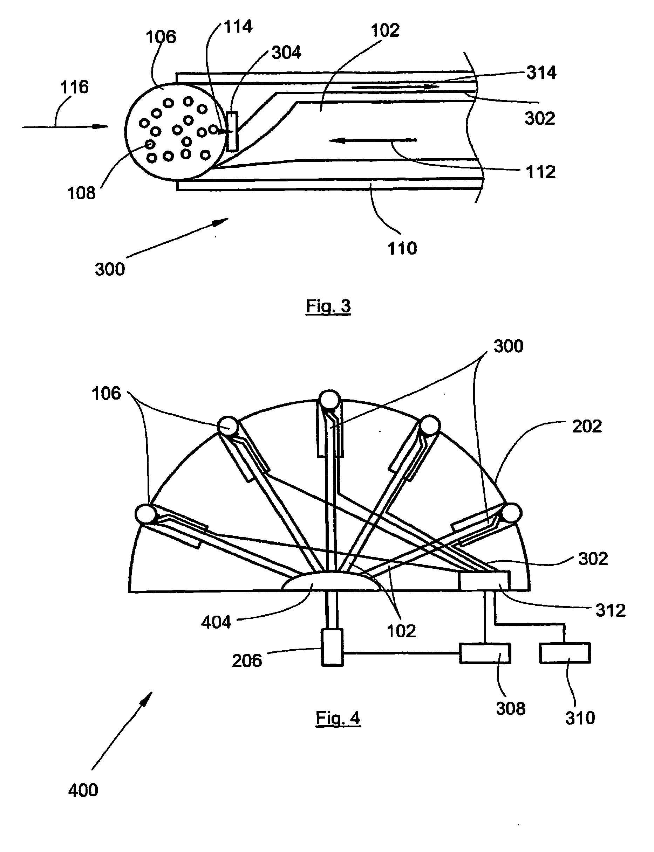

La Fig. 1 représente un concentrateur amplificateur 100 d'onde électromagnétique optique selon un premier mode de réalisation et la Fig. 3 représente un concentrateurs amplificateur 300 d'onde électromagnétique optique selon un deuxième mode de réalisation.

Chaque concentrateur amplificateur 100, 300 comprend au moins un dispositif de focalisation amplification 106 et respectivement un récepteur 102, 304. Le dispositif de focalisation amplification 106 est adapté à focaliser une onde électromagnétique optique incidente 116 sur respectivement le récepteur 102, 304.

Le dispositif de focalisation amplification 106 est réalisé en un matériau dopé avec des composants actifs 108 et est soumis à une onde d'excitation 112 qui fait passer les composants actifs 108 à un niveau d'énergie dit supérieure. Ce niveau d'énergie dit supérieure est tel que interaction entre l'onde électromagnétique incidente 116 et lesdits composants actifs 108 entraîne le passage desdits composants actifs 108 à un niveau d'énergie inférieure et l'émission d'au moins un photon ayant la même longueur d'onde que l'onde électromagnétique incidente vers respectivement le récepteur 102, 304.

Les composants actifs 108 sont dits adaptés à la longueur d'onde de l'onde électromagnétique incidente 116, c'est-à-dire qu'ils émettent un photon ayant la même longueur d'onde que celle des photons de l'onde électromagnétique incidente 116, quand ils sont éclairés par l'onde électromagnétique incidente 116. On a alors une photo-multiplication de la partie de l'onde électromagnétique incidente 116 captée par le dispositif de focalisation amplification 106, ce qui augmente le niveau d'énergie de l'onde reçue puis transmise respectivement au récepteur 102, 304.

La partie focalisée de l'onde électromagnétique optique incidente 116 et le ou les photons émis constituent alors une onde amplifiée incidente 114 de l'onde incidente 116.

En d'autres termes, l'onde électromagnétique optique incidente 116 éclaire le dispositif de focalisation amplification 106, lequel reçoit aussi l'onde d'excitation 112 et transmet en direction respectivement du récepteur 102, 304 l'onde amplifiée incidente 114.

Les composants actifs 108 peuvent être du type atome, ion atomiques, molécule, ion moléculaire ou autre.

Le dispositif de focalisation amplification 106 est donc éclairé par l'onde électromagnétique optique incidente 116 qui est issue d'un émetteur et permet de concentrer et focaliser la partie de l'onde électromagnétique issue de l'émetteur et reçue par le dispositif de focalisation amplification 106 vers respectivement le récepteur 102, 304. La mise en place d'un matériau dopé permet en outre une amplification du signal transmis du dispositif de focalisation amplification 106 vers respectivement le récepteur 102, 304.

Selon le premier mode de réalisation représenté Fig. 1, le récepteur peut être un guide d'onde 102 adapté à conduire l'onde électromagnétique amplifiée incidente 114 ainsi concentrée et focalisée vers un dispositif de traitement qui sera explicité ci-après. L'utilisation d'un guide d'onde 102 permet de déporter le dispositif de traitement du dispositif de focalisation amplification 106, contrairement à l'état de la technique qui oblige à coller le détecteur derrière le concentrateur.

Le guide d'onde 102 pourra être une fibre optique à l'extrémité de laquelle pourra être montée une microlentille 104, en vis-à-vis du dispositif de focalisation amplification 106, pour focaliser les faisceaux amplifiés issus du dispositif de focalisation amplification 106 vers le centre de la fibre optique 102.

Dans le cas particulier représenté en Fig. 1, le dispositif de focalisation amplification 106 sous forme d'une sphère et le guide d'onde 102 sous forme d'une fibre optique sont placés à l'intérieur d'un dispositif tubulaire 110, par exemple sous forme d'un tube de silice, ce qui facilite la mise en place de la fibre optique 102 par rapport au dispositif de focalisation amplification 106. La fibre optique 102 est positionnée dans le dispositif tubulaire 110 et le dispositif de focalisation amplification 106 est placé à l'extrémité du dispositif tubulaire 110. D'une part, le dispositif tubulaire 110 permet le réglage de la distance entre l'extrémité de la fibre optique 102 et le dispositif de focalisation amplification 106, afin de positionner cette extrémité au niveau de la région où se situe la concentration maximale d'énergie et d'autre part, il évite au maximum les pertes d'énergie entre le dispositif de focalisation amplification 106 et la fibre optique 102 en maintenant les faisceaux issus du dispositif de focalisation amplification 106 entre ses parois internes.

Le guide d'onde 102 pourra aussi être un guide planaire, sur lequel sont, par exemple, réalisés des alvéoles hémisphériques permettant la mise en place d'un ou de plusieurs dispositifs de focalisation amplification 106 sous forme de sphères.

Selon le deuxième mode de réalisation représenté Fig. 3, le récepteur peut être un convertisseur optique-électrique 304 adapté à recevoir l'onde électromagnétique amplifiée incidente 114 et à la convertir en un signal électrique 314 transporté par un câble électrique 302. Le convertisseur optique-électrique 304 peut, par exemple, être du type diode APD (Avalanche Photo Diode en Anglais). Avantageusement, un filtre placé entre le convertisseur optique-électrique 304 et le dispositif de focalisation amplification 106 permet de ne sélectionner que la ou les longueurs d'onde incidentes désirées parmi d'une part l'onde électromagnétique amplifiée incidente 114 et d'autre part l'onde d'excitation 112.

Selon les éléments constituant le concentrateur amplificateur 100 et les propriétés de l'onde électromagnétique incidente 116, le couplage entre le dispositif de focalisation amplification 106 et le récepteur 102, 304 pourra être critique ou non-critique.

Le dispositif de focalisation amplification 106 offre une ouverture angulaire maximale de 90°, directement dépendante de l'indice de réfraction du dispositif de focalisation amplification 106.

En particulier, le dispositif de focalisation amplification 106 peut prendre toute forme offrant une ouverture angulaire appropriée, comme par exemple, un hémisphère ou une sphère de verre.

Le contrôle du niveau d'énergie de l'onde d'excitation 112 permet un contrôle direct du niveau d'amplification, c'est-à-dire du niveau du signal détecté. D'une manière générale, une variation dans un sens de la puissance de l'onde d'excitation 112 entraîne une variation dans le même sens de la puissance de l'onde amplifiée incidente 114, c'est-à-dire qu'une augmentation de la puissance de l'onde d'excitation 112 entraînera une augmentation du nombre de photons émis et donc une augmentation de la puissance de l'onde amplifiée incidente 114, tandis qu'une diminution de la puissance de l'onde d'excitation 112 entraînera une diminution du nombre de photons émis et donc une diminution de la puissance de l'onde amplifiée incidente 114.

La photo-multiplication ainsi réalisée permet une amplification de l'énergie qui pénètre dans respectivement le récepteur 102, 304 et donc une meilleure détection du signal transporté par l'onde incidente.

Comme matériau pour le dispositif de focalisation amplification 106, on pourra utiliser des verres fluorés, phosphates, silicates, titanates ou autres sous forme de sphères de diamètre de l'ordre de 100 micromètres, et comme composants actifs 108, on pourra utiliser, selon la longueur d'onde de l'onde électromagnétique incidente, des ions erbium, ytterbium, neodyne ou autres ou une combinaison de ces éléments. Ces différentes caractéristiques ainsi que la concentration des composants actifs 108 doivent être choisies selon leur réactivité vis-à-vis de la longueur d'onde de l'onde électromagnétique incidente 116 et de manière à obtenir un effet d'amplification sans engendrer d'effet laser, par exemple, la concentration des composants actifs 108 sera de l'ordre de 0.01 mole à 15 moles pour cent.

Par exemple, dans le cas d'une onde électromagnétique incidente 116 comprise dans la bande 1060-1100 nm, on utilisera un dispositif de focalisation amplification 106 en verre fluoré ou silicate dopé d'ion neodyne à des concentrations comprises entre 0.01 mole à 15 moles pour cent

Les petites dimensions des différents éléments constituant le dispositif garantissent un faible encombrement.

L'utilisation de composant à base de verre permet de garantir une grande stabilité du dispositif vis-à-vis des variations de température, en effet ces éléments sont peu sensibles aux variations de température.

L'onde d'excitation 112 peut être un faisceau laser dit de pompage qui fournit un apport énergétique aux composants actifs 108 du dispositif de focalisation amplification 106, permettant ainsi l'excitation des composants actifs 108 et leur passage au niveau d'énergie supérieur.

Par exemple, pour une onde électromagnétique incidente 116 dont la longueur d'onde se situe aux environs de 1550 nm, l'apport énergétique fournit par l'onde d'excitation 112 sera de l'ordre de quelques microwatts à quelques milliwatts pour un dispositif de focalisation amplification 106 et la longueur d'onde de l'onde d'excitation 112 sera de l'ordre de 980 nm ou de l'ordre de 1480 nm dans le cas d'un dopage avec l'ion erbium dont les fréquences de résonance se situent aux environs de 980 nm et de 1480 nm ou dans le cas d'un co-dopage erbium/ytterbium dont la fréquence de résonance est de l'ordre de 980 nm.

La source de l'émission de l'onde d'excitation 112 peut être placée n'importe où par rapport au dispositif de focalisation amplification 106, du moment que l'onde d'excitation 112 éclaire le dispositif de focalisation amplification 106. Pour des raisons de gain de place, il est avantageux que la source soit placée à l'extrémité d'un guide d'onde adapté à conduire l'onde d'excitation 112 placé en vis-à-vis du dispositif de focalisation amplification 106.

Lorsque le récepteur est un convertisseur optique-électrique 304, le guide d'onde adapté à conduire l'onde d'excitation 112 est une fibre-optique 102, de préférence effilée pour permettre sa mise en place au voisinage du convertisseur optique-électrique 304.

Lorsque le récepteur est un guide d'onde, il est avantageux que le guide d'onde adapté à conduire l'onde d'excitation 112 et le guide d'onde 102 adapté à conduire l'onde électromagnétique amplifiée incidente 114 soient les mêmes. L'onde d'excitation 112 est ainsi émise vers le dispositif de focalisation amplification 106 à partir du guide d'onde 102.

La Fig. 2 représente un dispositif de réception 200 d'une onde électromagnétique incidente comprenant une pluralité de concentrateurs amplificateurs 100 selon le premier mode de réalisation et la Fig. 4 représente un dispositif de réception 400 d'une onde électromagnétique incidente comprenant une pluralité de concentrateurs amplificateurs 300 selon le deuxième mode de réalisation et dont la répartition spatiale permet de couvrir une ouverture angulaire spécifique.

Par exemple, dans le cas d'une liaison optique atmosphérique, l'onde électromagnétique incidente a généralement la forme d'un faisceau avec un angle de dispersion faible et les concentrateurs amplificateurs 100, 300 doivent être implantés de manière à couvrir uniquement le faisceau incident sans pouvoir capter les ondes électromagnétiques parasites. Les concentrateurs amplificateurs 100, 300 seront donc concentrés dans une région restreinte.

Dans le cas des réseaux locaux, l'onde électromagnétique incidente est émise dans toutes les directions avec un grand angle de dispersion et les concentrateurs amplificateurs 100, 300 doivent pouvoir capter le maximum d'énergie issue de cette onde, que ce soit directement ou après réflexion. La disposition des concentrateurs amplificateurs 100, 300 doit alors couvrir une ouverture angulaire étendue, en particulier 180°, les dispositifs de focalisation amplification 106 de la pluralité de concentrateurs amplificateurs 100, 300 seront répartis sur une surface 202, qui peut être sensiblement hémisphérique ou autre selon les caractéristiques d'amplification désirées ainsi que les caractéristiques de l'onde incidente.

L'augmentation du nombre de concentrateurs amplificateurs 100, 300 entraînera une augmentation de l'amplification. La densité de concentrateurs amplificateurs 100, 300 et leur disposition pourront être différentes selon les applications et les amplifications nécessaires.

Le dispositif de réception 200, 400 peut aussi comprendre un sommateur 212, 312 connecté à la pluralité de récepteurs 102, 304 des concentrateurs amplificateurs 100, 300 et adapté à additionner les énergies des signaux issus de chaque récepteur 102,304.

Dans le cas où les récepteurs sont des guides d'onde 102, le sommateur est un sommateur optique 212 et les énergies des signaux sont les énergies des onde électromagnétique amplifiées incidentes 114. Les entrées du sommateur optique 212 sont connectées avec les guides d'onde 102 de la pluralité de concentrateurs amplificateurs 100 et qui réalise la somme des énergies des onde électromagnétique amplifiées incidentes 114 conduites par chaque guide d'onde 102, et dont la sortie peut être injectée dans un coupleur ou un démultiplexeur 204. Le coupleur ou démultiplexeur 204 peut alors être connecté d'une part à un dispositif de mesure 208 de l'énergie de l'onde en sortie du coupleur 204 et d'autre part à un générateur 206 d'onde d'excitation 112. La sortie du dispositif de mesure 208 peut être injectée dans un convertisseur optique/électrique 210 dans le cas d'un besoin de conversion du signal lumineux et le dispositif de mesure 208 peut être relié au générateur 206 afin de contrôler sa puissance.

Le fonctionnement du dispositif de réception 200 est alors le suivant. Une partie de l'onde incidente est captée par la pluralité de concentrateurs amplificateurs 100 et est amplifiée lors du passage à travers les dispositifs de focalisation amplification 106. Les guides d'onde 102 situés derrière chaque dispositif de focalisation amplification 106 reçoivent donc, par une extrémité, une partie 114 amplifiée de l'onde incidente et la conduisent jusqu'à une autre extrémité. L'ensemble de ces autres extrémités est connecté au sommateur 212 qui permet de générer une onde dont l'énergie lumineuse est sensiblement égale à la somme des énergies lumineuses des parties d'ondes électromagnétiques 114 transmises par les guides d'ondes 102.

Le coupleur optique ou démultiplexeur 204 connecté en sortie du sommateur optique 212 permet d'injecter l'onde d'excitation 112 issu du générateur 206 dans le guide d'onde 102. La puissance délivrée par le générateur 206 doit être suffisant pour alimenter l'ensemble des dispositifs de focalisation amplification 106.

L'amplification générée par les composants actifs 108 peut entraîner la production d'une onde dont l'énergie optique est importante, il est alors intéressant de pouvoir contrôler le niveau d'énergie de l'onde en sortie du coupleur 204. Le dispositif 208 de mesure de l'énergie de l'onde en sortie du coupleur 204 permet de vérifier ce niveau par rapport à un niveau maximal et lorsque le niveau dépasse le niveau maximal, le dispositif de mesure 208 est apte à diminuer la puissance de l'onde d'excitation 112 en agissant sur le générateur 206. D'une manière similaire, lorsque le niveau est inférieur à un niveau minimal, le dispositif de mesure 208 est apte à augmenter la puissance de l'onde d'excitation 112.

Lorsque le signal lumineux doit être converti en signal électrique, le convertisseur optique/électrique 210 est placé en sortie du dispositif de mesure 208, mais ce convertisseur optique/électrique 210 est inutile lorsque le traitement ultérieur du signal lumineux est réalisé par un dispositif tout optique.

Dans le cas où les récepteurs sont des convertisseurs optiques-électriques 304, le sommateur est un sommateur électrique 312 et les énergies des signaux sont les énergies des signaux électriques 314. Les entrées du sommateur électrique 312 sont connectées aux câbles électriques 302 de la pluralité de concentrateurs amplificateurs 300 et qui crée un signal électrique incident en réalisant la somme des énergies électriques issues des convertisseurs optiques-électriques 304 et représentatives des onde électromagnétique amplifiées incidentes 114 issues de chaque dispositif de focalisation amplification 106. La sortie du sommateur électrique 312 peut être injectée d'une part dans un dispositif de traitement 310 du signal électrique incident et d'autre part dans un dispositif de mesure 308 de l'énergie du signal électrique incident.

Le dispositif de réception 400 comprend un démultiplexeur optique 404 qui reçoit en entrée l'onde d'excitation 112 émis par le générateur 206 et émet une partie de l'onde d'excitation 112 en sortie en direction de la pluralité de guides d'ondes adaptés à conduire l'onde d'excitation 112.

Le dispositif de mesure 308 peut être relié au générateur 206 afin de contrôler sa puissance.

Le fonctionnement du dispositif de réception 400 est alors le suivant. Une partie de l'onde incidente est captée par la pluralité de concentrateurs amplificateurs 300 et est amplifiée lors du passage à travers les dispositifs de focalisation amplification 106, puis elle est convertie en signal électrique 314 par l'intermédiaire des convertisseurs optiques-électriques 304 qui sont connectés au sommateur électrique 312 par l'intermédiaire des câbles électriques 302.

Le sommateur électrique 312 permet de générer un signal dont le niveau énergétique est sensiblement égal à la somme des niveaux énergétiques des signaux électriques 314 transmis par les câbles 302 depuis les convertisseurs optiques-électriques 304.

Le démultiplexeur 404 permet d'injecter l'onde d'excitation 112 issu du générateur 206 dans les guides d'onde 102. La puissance délivrée par le générateur 206 doit être suffisant pour alimenter l'ensemble des dispositifs de focalisation amplification 106.

L'amplification générée par les composants actifs 108 peut entraîner la production d'une onde dont l'énergie optique est importante, il est alors intéressant de pouvoir contrôler le niveau d'énergie de l'onde en sortie du générateur 206. Le dispositif 308 de mesure de l'énergie électrique en sortie du sommateur électrique 312 permet de vérifier ce niveau par rapport à un niveau maximal et lorsque le niveau dépasse le niveau maximal, le dispositif de mesure 308 est apte à diminuer la puissance de l'onde d'excitation 112 en agissant sur le générateur 206. D'une manière similaire, lorsque le niveau est inférieur à un niveau minimal, le dispositif de mesure 308 est apte à augmenter la puissance de l'onde d'excitation 112.

Bien entendu, la présente invention n'est pas limitée aux exemples et modes de réalisation décrits et représentés, mais elle est susceptible de nombreuses variantes accessibles à l'homme de l'art.

Par exemple, le concentrateur amplificateur 100, 300 et le dispositif de réception 200, 400 ne sont pas limités au traitement d'une onde électromagnétique à un seule longueur d'onde, mais ils peuvent traités des ondes à plusieurs longueurs d'ondes.

On pourra alors dopés les dispositif de focalisation amplification 106 avec plusieurs composants actifs 108, chaque composant actif 108 étant adapté à au moins une longueur d'onde.

On pourra aussi implanté dans le dispositif de réception 200, 400, des concentrateurs amplificateurs 100, 300 adaptés à chaque longueur d'onde.

Les différents composants du dispositif de réception 200 sont représentés comme étant distants les uns des autres et reliés par des guides d'onde, mais ils peuvent aussi être collés les uns aux autres pour éviter les pertes d'insertion.

## Revendications

1. Concentrateur amplificateur (100, 300) d'onde électromagnétique optique comprenant au moins un dispositif de focalisation amplification (106) et un récepteur (102, 304), le dispositif de focalisation amplification (106) étant adapté à focaliser une onde électromagnétique optique incidente (116) sur le récepteur (102, 304),
le concentrateur amplificateur (100, 300) étant **caractérisé en ce que** le dispositif de focalisation amplification (106) est réalisé en un matériau dopé avec des composants actifs (108) et **en ce que** le dispositif de focalisation amplification (106) est destiné à être soumis à une onde d'excitation (112) de manière à faire passer les composants actifs (108) à un niveau d'énergie tel que l'interaction entre l'onde électromagnétique incidente (116) et lesdits composants actifs (108) entraîne le passage desdits composants actifs (108) a un niveau d'énergie inférieure et l'émission d'au moins un photon ayant la même longueur d'onde que l'onde électromagnétique incidente (116) vers le récepteur (102, 304), la partie focalisée de l'onde électromagnétique optique incidente ainsi que le ou les photons émis constituant une onde amplifiée incidente (114) de l'onde électromagnétique incidente (116).

2. Concentrateur amplificateur (100, 300) selon la revendication 1, **caractérisé en ce qu'**une variation dans un sens de la puissance de l'onde d'excitation (112) entraîne une variation dans le même sens de la puissance de l'onde amplifiée incidente (114).

3. Concentrateur amplificateur (100, 300) selon l'une des revendications 1 à 2, **caractérisé en ce que** le dispositif de focalisation amplification (106) est sphérique ou hémisphérique.

4. Concentrateur amplificateur (100) selon l'une des revendications 1 à 3, **caractérisé en ce que** le récepteur est un guide d'onde (102) adapté à conduire l'onde amplifiée incidente (114).

5. Concentrateur amplificateur (100) selon la revendication 4, **caractérisé en ce que** le guide d'onde est une fibre optique (102).

6. Concentrateur amplificateur (100) selon la revendication 5, **caractérisé en ce que** l'extrémité de la fibre optique (102) en vis-à-vis du dispositif de focalisation amplification (106) est munie d'une microlentille (104).

7. Concentrateur amplificateur (100) selon l'une des revendications 5 à 6, **caractérisé en ce qu'**il comprend un dispositif tubulaire (110) dans lequel est positionnée la fibre optique (102) et à l'extrémité duquel est placé le dispositif de focalisation amplification (106).

8. Concentrateur amplificateur (100) selon la revendication 4, **caractérisé en ce que** le guide d'onde (102) est un guide planaire.

9. Concentrateur amplificateur (300) selon l'une des revendications 1 à 3, **caractérisé en ce que** le récepteur est un convertisseur optique-électrique (304).

10. Concentrateur amplificateur (100, 300) selon l'une des revendications 1 à 9, **caractérisé en ce que** l'onde d'excitation (112) est un faisceau laser.

11. Concentrateur amplificateur (100, 300) selon l'une des revendications 1 à 10, **caractérisé en ce que** l'onde d'excitation (112) est émise vers le dispositif de focalisation amplification (106) à partir d'un guide d'onde adapté à conduire l'onde d'excitation (112).

12. Concentrateur amplificateur (100) selon la revendication 11 lorsqu'elle dépend des revendications 4 à 8, **caractérisé en ce que** le guide d'onde adapté à conduire l'onde d'excitation (112) est le guide d'onde (102) adapté à conduire l'onde amplifiée incidente (114).

13. Dispositif de réception (200, 400) d'une onde électromagnétique optique incidente comprenant une pluralité de concentrateurs amplificateurs (100, 300) selon l'une des revendications précédentes.

14. Dispositif de réception (200, 400) selon la revendication 13, **caractérisé en ce que** les dispositifs de focalisation amplification (106) de la pluralité de concentrateurs amplificateurs (100, 300) sont répartis sur une surface sensiblement hémisphérique (202).

15. dispositif de réception (200, 400) selon l'une des revendications 13 à 14, **caractérisé en ce qu'**il comprend un sommateur (212, 312) connecté à la pluralité de récepteurs (102, 304) et adapté à additionner les énergies des signaux issus de chaque récepteurs (102, 304).

16. Dispositif de réception (200, 400) selon la revendication 15 lorsque les récepteurs sont des guides d'onde (102), **caractérisé en ce qu'**il comprend un coupleur optique ou un démultiplexeur (204) connecté en sortie du sommateur optique (212) et dans lequel est injecté l'onde d'excitation (112).

17. dispositif de réception (200) selon la revendication 16, **caractérisé en ce qu'**il comprend un dispositif de mesure (208) de l'énergie de l'onde en sortie du coupleur optique ou du démultiplexeur (204) et **en ce que** le dispositif de mesure (208) est adapté à contrôler la puissance de l'onde d'excitation (112).

18. Dispositif de réception (400) selon la revendication 15 lorsque les récepteurs sont des convertisseurs optiques-électriques, **caractérisé en ce qu'**il comprend un démultiplexeur optique (404) dans lequel est injecté l'onde d'excitation (112) et dont les sorties sont connectées à la pluralité de guides d'onde adaptés à conduire l'onde d'excitation (112).

19. Dispositif de réception (400) selon la revendication 18, **caractérisé en ce qu'**il comprend un dispositif de mesure (308) de l'énergie du signal électrique en sortie du sommateur électrique (312) et **en ce que** le dispositif de mesure (308) est adapté à contrôler la puissance de l'onde d'excitation (112).

## Claims

1. Optical electromagnetic wave amplifying concentrator (100, 300) comprising at least one amplification focusing device (106) and a receiver (102, 304), the amplification focusing device (106) being designed to focus an incident optical electromagnetic wave (116) onto the receiver (102, 304),
the amplifying concentrator (100, 300) being **characterized in that** the amplification focusing device (106) is made of a material doped with active components (108) and **in that** the amplification focusing device (106) is intended to be subjected to an excitation wave (112) so as to make the active components (108) undergo a transition to an energy level such that the interaction between the incident electromagnetic wave (116) and said active components (108) results in the transition of said active components (108) to a lower energy level and the emission of at least one photon having the same wavelength as the incident electromagnetic wave (116) towards the receiver (102, 304), the focused part of the incident optical electromagnetic wave and the photon or photons emitted constituting an incident amplified wave (114) of the incident electromagnetic wave (116).

2. Amplifying concentrator (100, 300) according to Claim 1, **characterized in that** a variation in one direction of the power of the excitation wave (112) results in a variation in the same direction of the power of the incident amplified wave (114).

3. Amplifying concentrator (100, 300) according to either of Claims 1 and 2, **characterized in that** the amplification focusing device (106) is spherical or hemispherical.

4. Amplifying concentrator (100) according to one of Claims 1 to 3, **characterized in that** the receiver is a waveguide (102) designed to conduct the incident amplified wave (114).

5. Amplifying concentrator (100) according to Claim 4, **characterized in that** the waveguide is an optical fibre (102).

6. Amplifying concentrator (100) according to Claim 5, **characterized in that** the end of the optical fibre (102) facing the amplification focusing device (106) is provided with a microlens (104).

7. Amplifying concentrator (100) according to either of Claims 5 and 6, **characterized in that** it includes a tubular device (110) in which the optical fibre (102) is positioned and at the end of which the amplification focusing device (106) is placed.

8. Amplifying concentrator (100) according to Claim 4, **characterized in that** the waveguide (102) is a planar waveguide.

9. Amplifying concentrator (300) according to one of Claims 1 to 3, **characterized in that** the receiver is an optical/electrical converter (304).

10. Amplifying concentrator (100, 300) according to one of Claims 1 to 9, **characterized in that** the excitation wave (102) is a laser beam.

11. Amplifying concentrator (100, 300) according to one of Claims 1 to 10, **characterized in that** the excitation wave (112) is emitted towards the amplification focusing device (106) from a waveguide designed to conduct the excitation wave (112).

12. Amplifying concentrator (100) according to Claim 11 when it depends on Claims 4 to 8, **characterized in that** the waveguide designed to conduct the excitation wave (112) is the waveguide (102) designed to conduct the incident amplified wave (114).

13. Reception device (200, 400) for receiving an incident optical electromagnetic wave, comprising a plurality of amplifying concentrators (100, 300) according to one of the preceding claims.

14. Reception device (200, 400) according to Claim 13, **characterized in that** the amplification focusing devices (106) of the plurality of amplifying concentrators (100, 300) are distributed over an approximately hemispherical surface (202).

15. Reception device (200, 400) according to either of Claims 13 and 14, **characterized in that** it comprises a summer (212, 312) connected to the plurality of receivers (102, 304) and designed to add the energies of the signals output by each of the receivers (102, 304).

16. Reception device (200, 400) according to Claim 15 when the receivers are waveguides (102), **characterized in that** it comprises an optical coupler or a demultiplexer (204) which is connected to the output of the optical summer (212) into which the excitation wave (112) is injected.

17. Reception device (200) according to Claim 16, **characterized in that** it comprises a device (208) for measuring the energy of the wave output by the optical coupler or demultiplexer (204) and **in that** the measuring device (208) is designed to control the power of the excitation wave (112).

18. Reception device (400) according to Claim 15 when the receivers are optical/electrical converters, **characterized in that** it comprises an optical demultiplexer (404) into which the excitation wave (112) is injected and the outputs of which are connected to the plurality of waveguides designed to conduct the excitation wave (112).

19. Reception device (400) according to Claim 18, **characterized in that** it comprises a device (308) for measuring the energy of the electrical signal output by the electrical summer (312) and **in that** the measuring device (308) is designed to control the power of the excitation wave (112).

## Patentansprüche

1. Konzentrator-Verstärker (100, 300) einer optischen elektromagnetischen Welle, der mindestens eine Vorrichtung (106) zur Fokussierung-Verstärkung (106) und einen Empfänger (102, 304) aufweist, wobei die Fokussierungs-Verstärkungs-Vorrichtung (106) geeignet ist, um eine einfallende optische elektromagnetische Welle (116) auf den Empfänger (102, 304) zu fokussieren,
wobei der Konzentrator-Verstärker (100, 300) **dadurch gekennzeichnet ist, dass** die Fokussierungs-Verstärkungs-Vorrichtung (106) aus einem mit aktiven Elementen (108) dotierten Werkstoff hergestellt ist, und dass die Fokussierungs-Verstärkungs-Vorrichtung (106) dazu bestimmt ist, einer Anregungswelle (112) ausgesetzt zu werden, um die aktiven Elemente (108) auf ein solches Energieniveau übergehen zu lassen, dass die Wechselwirkung zwischen der einfallenden elektromagnetischen Welle (116) und den aktiven Elementen (108) den Übergang der aktiven Elemente (108) auf ein niedriges Energieniveau und das Emittieren mindestens eines Photons mit der gleichen Wellenlänge wie die einfallende elektromagnetische Welle (116) zum Empfänger (102, 304) bewirkt, wobei der fokussierte Teil der einfallenden optischen elektromagnetischen Welle sowie die emittierten Photonen eine verstärkte einfallende Welle (114) der einfallenden elektromagnetischen Welle (116) bilden.

2. Konzentrator-Verstärker (100, 300) nach Anspruch 1, **dadurch gekennzeichnet, dass** eine Veränderung der Leistung der Anregungswelle (112) in einer Richtung eine Veränderung der Leistung der verstärkten einfallenden Welle (114) in der gleichen Richtung bewirkt.

3. Konzentrator-Verstärker (100, 300) nach einem der Ansprüche 1 bis 2, **dadurch gekennzeichnet, dass** die Fokussierungs-Verstärkungs-Vorrichtung (106) kugelförmig oder halbkugelförmig ist.

4. Konzentrator-Verstärker (100) nach einem der Ansprüche 1 bis 3, **dadurch gekennzeichnet, dass** der Empfänger ein Wellenleiter (102) ist, der geeignet ist, um die verstärkte einfallende Welle (114) zu leiten.

5. Konzentrator-Verstärker (100) nach Anspruch 4, **dadurch gekennzeichnet, dass** der Wellenleiter eine Lichtleitfaser {102} ist.

6. Konzentrator-Verstärker (100) nach Anspruch 5, **dadurch gekennzeichnet, dass** das Ende der Lichtleitfaser (102) gegenüber der Fokussierungs-Verstärkungs-Vorrichtung (106) mit einer Mikrolinse (104) versehen ist.

7. Konzentrator-Verstärker (100) nach einem der Ansprüche 5 bis 6, **dadurch gekennzeichnet, dass** er eine rohrförmige Vorrichtung (110) aufweist, in der die Lichtleitfaser (102) positioniert ist und an deren Ende die Fokussierungs-Verstärkungs-Vorrichtung (106) angeordnet ist.

8. Konzentrator-Verstärker (100) nach Anspruch 4, **dadurch gekennzeichnet, dass** der Wellenleiter (102) ein planarer Leiter ist.

9. Konzentrator-Verstärker (300) nach einem der Ansprüche 1 bis 3, **dadurch gekennzeichnet, dass** der Empfänger ein optisch-elektrischer Wandler (304) ist.

10. Konzentrator-Verstärker (100, 300) nach einem der Ansprüche 1 bis 9, **dadurch gekennzeichnet, dass** die Anregungswelle (112) ein Laserstrahl ist.

11. Konzentrator-Verstärker (100, 300) nach einem der Ansprüche 1 bis 10, **dadurch gekennzeichnet, dass** die Anregungswelle (112) ausgehend von einem Wellenleiter zur Fokussierungs-Verstärkungs-Vorrichtung (106) emittiert wird, der geeignet ist, um die Anregungswelle (112) zu leiten.

12. Konzentrator-Verstärker (100) nach Anspruch 11, wenn er von den Ansprüchen 4 bis 8 abhängt, **dadurch gekennzeichnet, dass** der Wellenleiter, der geeignet ist, um die Anregungswelle (112) zu leiten, der Wellenleiter (102) ist, der geeignet ist, um die verstärkte einfallende Welle (114) zu leiten.

13. Empfangsvorrichtung (200, 400) einer einfallenden optischen elektromagnetischen Welle, die mehrere Konzentratoren-Verstärker (100, 300) nach einem der vorhergehenden Ansprüche aufweist.

14. Empfangsvorrichtung (200, 400) nach Anspruch 13, **dadurch gekennzeichnet, dass** die Fokussierungs-Verstärkungs-Vorrichtungen (106) der mehreren Konzentratoren-Verstärker (100, 300) auf einer im Wesentlichen halbkugelförmigen Fläche (202) verteilt sind.

15. Empfangsvorrichtung (200, 400) nach einem der Ansprüche 13 bis 14, **dadurch gekennzeichnet, dass** sie ein Summierglied (212, 312) aufweist, das mit den mehreren Empfängern (102, 304) verbunden und geeignet ist, um die Energien der Signale zu addieren, die von jedem Empfänger (102, 304) stammen.

16. Empfangsvorrichtung (200, 400) nach Anspruch 15, wenn die Empfänger Wellenleiter (102) sind, **dadurch gekennzeichnet, dass** sie einen optischen Koppler oder einen Demultiplexer (204) aufweist, der mit dem Ausgang des optischen Summierglieds (212) verbunden ist und in den die Anregungswelle (112) eingespeist wird.

17. Empfangsvorrichtung (200) nach Anspruch 16, **dadurch gekennzeichnet, dass** sie eine Vorrichtung (208) zur Messung der Energie der Welle am Ausgang des optischen Kopplers oder des Demultiplexers (204) aufweist und dass die Messvorrichtung (208) geeignet ist, um die Leistung der Anregungswelle (112) zu steuern.

18. Empfangsvorrichtung (400) nach Anspruch 15, wenn die Empfänger optisch-elektrische Wandler sind, **dadurch gekennzeichnet, dass** sie einen optischen Demultiplexer (404) aufweist, in den die Anregungswelle (112) eingespeist wird und dessen Ausgänge mit den mehreren Wellenleitern verbunden sind, die geeignet sind, um die Anregungswelle (112) zu leiten.

19. Empfangsvorrichtung (400) nach Anspruch 18, **dadurch gekennzeichnet, dass** sie eine Vorrichtung (308) zur Messung der Energie des elektrischen Signals am Ausgang des elektrischen Summierglieds (312) aufweist und dass die Messvorrichtung (308) geeignet ist, um die Leistung der Anregungswelle (112) zu steuern.
